# EUROPEAN PATENT SPECIFICATION

(11) **EP 2 696 645 B1**
(45) Date of publication and mention of the grant of the patent: **01.07.2020**
(21) Application number: 12767596.5
(22) Date of filing: 19.03.2012
(51) Int. Cl.: H04W 16/10, H04B 17/345, H04B 17/382

(54) **METHOD AND DEVICE FOR INTER-CELL INTERFERENCE COORDINATION**
VERFAHREN UND VORRICHTUNG ZUR INTERFERENZKOORDINIERUNG ZWISCHEN ZELLEN
PROCÉDÉ ET DISPOSITIF POUR UNE COORDINATION DES INTERFÉRENCES ENTRE LES CELLULES

(30) Priority: 08.04.2011 CN 201110088347
(43) Date of publication of application: 12.02.2014
(73) Proprietor: China Academy of Telecommunications Technology, Haidian District Beijing 100191 (CN)
(72) Inventor: PAN, Xueming, Beijing 100191 (CN); XU, Jing, Beijing 100191 (CN); SHEN, Zukang, Beijing 100191 (CN)
(74) Representative: Körfer, Thomas
(86) International application number: PCT/CN2012/072513
(87) International publication number: WO 2012/136100

(56) References cited:
- WO-A2-2008/115003
- CN-A- 101 646 257
- CN-A- 101 646 257
- CN-A- 101 917 729
- CN-A- 102 149 099
- LG ELECTRONICS: "Details of eICIC in Macro-Pico case", 3GPP DRAFT; R1-105352, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450504, [retrieved on 2010-10-05]
- RAN WG1: "LS on Ran1 ICIC status", 3GPP DRAFT; R2-080706_R1-080564_ON_ICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080202, 2 February 2008 (2008-02-02), XP050138534, [retrieved on 2008-02-02]
- "3rd Generation Partnership Project; Technical Specification Group Radio Access Network; Evolved Universal Terrestrial Radio Access Network (E-UTRAN); X2 application protocol (X2AP) (Release 10)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 29 March 2011 (2011-03-29), pages 1-132, XP050476732, [retrieved on 2011-03-29]
- CMCC: "Basic ICIC procedures on X2", 3GPP DRAFT; R3-080762_BASIC ICIC PROCEDURES ON X2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080325, 25 March 2008 (2008-03-25), XP050163969, [retrieved on 2008-03-25]
- CATT: "Remaining details of backhaul signaling in TDD eIMTA", 3GPP DRAFT; R1-134079, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717271, Retrieved from the Internet: URL:http://www.3gpp.org/ftp/tsg_ran/WG1_RL 1/TSGR1_74b/Docs/ [retrieved on 2013-09-28]
- HUAWEI ET AL: "Further discussion on eNB-to-eNB interference indicator", 3GPP DRAFT; R1-134045, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717237, Retrieved from the Internet: URL:http://www.3gpp.org/ftp/tsg_ran/WG1_RL 1/TSGR1_74b/Docs/ [retrieved on 2013-09-28]
- NSN: "Further analysis of TDD eIMTA impacts on X2AP", 3GPP DRAFT; R3-132093 EIMTA_DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. San Francisco, USA; 20131111 - 20131115 12 November 2013 (2013-11-12), XP050738185, Retrieved from the Internet: URL:http://www.3gpp.org/ftp/Meetings_3GPP_ SYNC/RAN/RAN3/Docs/ [retrieved on 2013-11-12]
- "3rd Generation Partnership Project; Technical Specification Group Radio Access Network; Evolved Universal Terrestrial Radio Access (E-UTRA); Physical channels and modulation (Release 10)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 22 December 2010 (2010-12-22) , pages 1-103, XP050462365,

## Description

### Field of the Invention

The present invention relates to the field of wireless communication technologies and particularly to a method and a device for inter-cell interference coordination.

### Background of the Invention

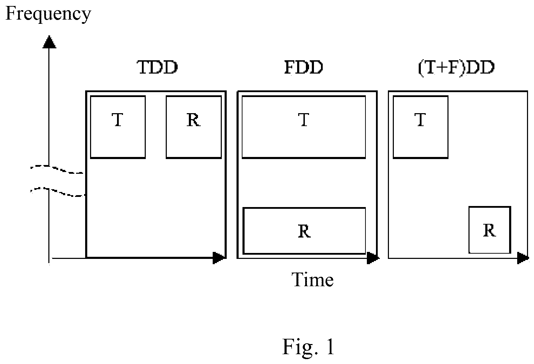

For general duplex modes adopted by a cellular system, as illustrated in Fig. 1, the Time Division Duplex (TDD) mode refers to transmission of uplink and downlink signals in the uplink and the downlink in the same operating frequency band in different time interval with a guard period between the uplink and the downlink; and the Frequency Division Duplex (FDD) mode refers to transmission of uplink and downlink signals in the uplink and the downlink in different operating frequency bands over different frequency carriers at the same time with a guard band between the uplink and the downlink.

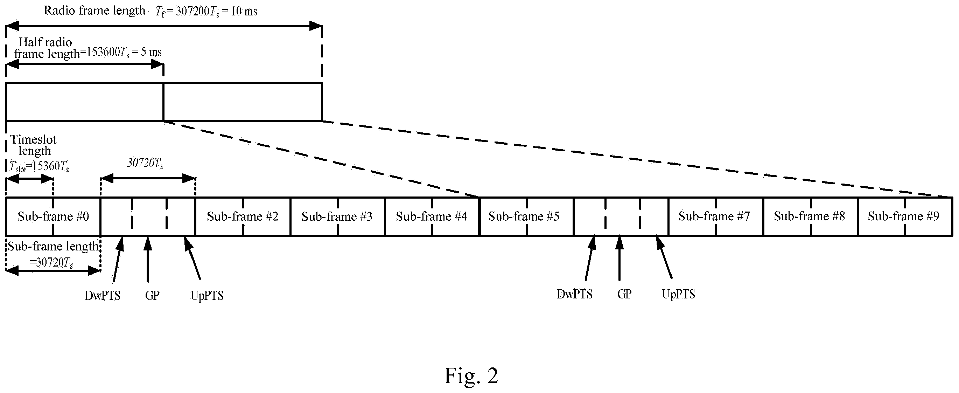

There is a somewhat complex frame structure of a Time Division-Long Term Evolution (TD-LTE) system, as illustrated in Fig. 2, where a radio frame has a length of 10ms and includes 10 sub-frames including a special sub-frame and normal sub-frames, each of the sub-frames is 1ms. The special sub-frame includes 3 timeslots: a DwPTS for transmission of a Packet Switched Service (PSS)/ a Physical Downlink Control Channel (PDCCH)/ a Physical HARQ Indicator Channel (PHICH)/ a Physical Control Format Indicator Channel (PCFICH)/ a Physical Downlink Shared Channel (PDSCH), etc.; a GP functioning as a guard period between the uplink and the downlink; and an UpPTS for transmission of a Sounding Reference Symbol (SRS)/ a Physical Random Access Channel (PRACH). The normal sub-frames include uplink sub-frames and downlink sub-frames for transmission uplink and downlink control signalling, service data, etc. Two special sub-frames (sub-frames #1 and #6) can be configured or one special sub-frame (a sub-frame #1) can be configured in one radio frame. A sub-frame #0 and a sub-frame #5 and the DwPTS in the special sub-frame are always used for downlink transmission, a sub-frame #2 and the UpPTS in the special sub-frame are always used for uplink transmission, and the other sub-frames can be configured for uplink transmission or downlink transmission as needed.

In the TD-LTE system, the three timeslots DwPTS/GP/UpPTS in the special sub-frame are 1ms in total, and the three timeslots are assigned in length to support different configuration conditions, as depicted in Table 1, where the time is in a length unit of *Tₛ*, and 1*T*ₛ=1/(15000×2048) second.

**Table 1 Configuration Format of a TD-LTE Special Sub-frame**

| Configuration No. | Normal CP | | | Extended CP | | |
|---|---|---|---|---|---|---|
| | DwPTS | GP | UpPTS | DwPTS | GP | UpPTS |
| 0 | 6592 ·*T*ₛ | 21936 · *T*ₛ | 2192 · *T*ₛ | 7680 · *T*ₛ | 20480 · *T*ₛ | 2560 · *T*ₛ |
| 1 | 19760 · *T*ₛ | 8768 · *T*ₛ | | 20480 · *T*ₛ | 7680 · *T*ₛ | |
| 2 | 21952 · *T*ₛ | 6576 ·*T*ₛ | | 23040 · *T*ₛ | 5120 · *T*ₛ | |
| 3 | 24144 · *T*ₛ | 4384 · *T*ₛ | | 25600 · *T*ₛ | 2560 · *T*ₛ | |
| 4 | 26336 · *T*ₛ | 2192 · *T*ₛ | | 7680 · *T*ₛ | 17920 · *T*ₛ | 5120 · *T*ₛ |
| 5 | 6592 · *T*ₛ | 19744 · *T*ₛ | 4384 · *T*ₛ | 20480 · *T*ₛ | 5120 · *T*ₛ | |
| 6 | 19760 · *T*ₛ | 6576 · *T*ₛ | | 23040 · *T*ₛ | 2560 · *T*ₛ | |
| 7 | 21952 · *T*ₛ | 4384 · *T*ₛ | | - | - | - |
| 8 | 24144 · *T*ₛ | 2192 · *T*ₛ | | - | | - |

In the TD-LTE system, there are 7 supported allocation schemes of the uplink and downlink sub-frames, and configuration parameters are as depicted in Table 2, where D represents downlink transmission, U represents uplink transmission, and S represents that the sub-frame is a special sub-frame including three sections of DwPTS, GP and UpPTS.

**Table 2 Configuration Format of TD-LTE Uplink and Downlink Sub-frames**

| Configuration No. | Switching Period | Sub-frame No. | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

The foregoing configuration of the special sub-frame and configuration schemes of the uplink and downlink sub-frames are broadcasted to all of users in a cell in System Information (SI).

As can be apparent, a change to the foregoing two frame configuration parameters through a System Information Change is supported in the TD-LTE standard, but this change further needs procedures of paging, newly reading system information, etc., and there are several ambiguous issues before and after the change, for example, resulting in an adverse influence on Hybrid Automatic Repeat Request (HARQ) operation and scheduling, etc. If the frame configurations are changed frequently, then the performance of the system will be seriously degraded. Moreover, there is a minimum frame configuration change period of 640 ms supported in the TD-LTE standard, and this cannot accommodate a dynamically changing requirement of a service.

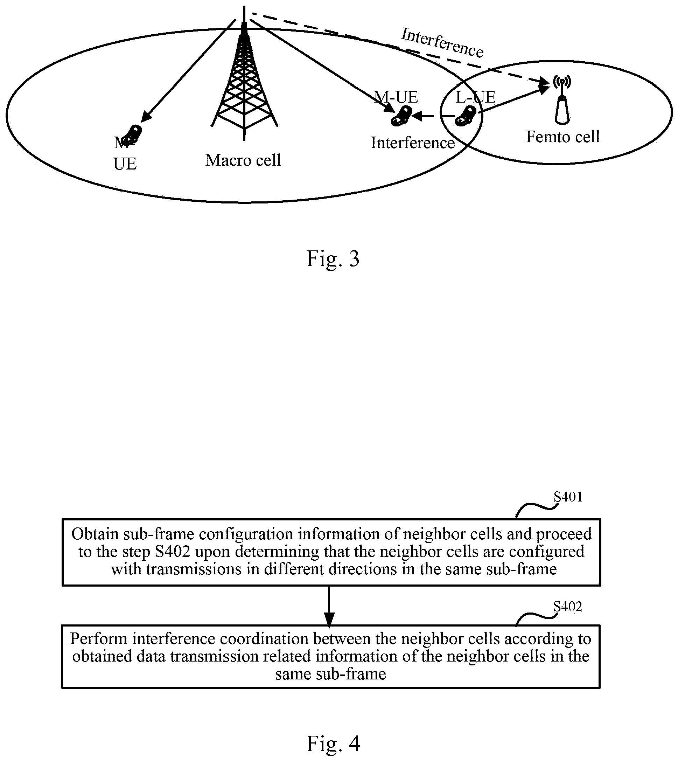

In view of this, there is a dynamic uplink and downlink sub-frame allocation solution proposed in the prior art, but in this dynamic TDD sub-frame configuration solution, if different uplink and downlink sub-frames configurations are set for different cells, as illustrated in Fig. 3, then cross-timeslot interference of neighbor cells will arise, and such interference includes interference of neighbor cells at the same frequency and interference of neighbor cells at adjacent frequencies. If such interference fails to be addressed, then the benefit of a dynamic configuration of the uplink-to-downlink ratio cannot be gained, and on the contrary, the entire network will be broken down. It shall be noted that the neighbor cells here can be geographically neighbor cells over the same TDD carrier (as illustrated in Fig. 3). Also the cells as referred here to can be cells deployed at the same layer (e.g., macro cells) or can be cells deployed across different layers (e.g., a macro cell, a femto cell, a home base station, etc.)

A traditional method for avoiding TDD cross-timeslot interference is the use of sub-frame coordination, where the current cell cannot use a sub-frame for downlink transmission when it is known that the sub-frame is used by a neighbor cell for uplink transmission, that is, the current cell sets the sub-frame to be an uplink sub-frame or idle. Since there are different service conditions in respective cells, this traditional method poses a significant restraint on the operation of a real network in that the respective cells cannot select their sub-frame configuration schemes according to their own real-time service conditions, thus lowering the utilization of system resources of the TDD network.

LG ELECTRONICS: "Details of eICIC in Macro-Pico case", 3GPP DRAFT; R1-105352 discloses the following: three information elements (IE) are defined for backhaul based eICIC as follows: UL Interference Overload Indication (OI) which provides per PRB a report on interference overload, UL High Interference Indication (HII) which provides per PRB a 2 level report on interference sensitivity to neighbor cell, and Relative Narrowband Tx power (RNTP) for DL which provides an indication on DL power restriction per PRB in a cell and other information needed by a neighbor eNB for interference aware scheduling. A time-domain component is added to Rel-8/9 RNTP/HII with the goal to coordinate the use of "almost blank subframes" in the network. In other words, each eNB informs neighbor eNB what power allocation per subframe is scheduled to own cell.

WO 2008/115003 A2 discloses the following: a resource allocation method and a method for transmitting resource allocation information in a mobile communication system are disclosed. That is, a LVRB (PRB) and a DBRB which are units of a scheduling resource are defined and a resource allocation method and a method for transmitting resource allocation information using the same are disclosed. In the LVRB, a part-bitmap scheduling method using a LVRB set is suggested and a method for constructing resource allocation information using the same is suggested. In the DVRB, a method for defining the DVRB using the PRBs in a subframe is suggested and a method for constructing resource allocation information using the same when scheduling is performed using the DVRB constructed by the defined method is suggested. In order to prevent interference and collision from occurring due to complete matching of the DVRBs in respective cells, a method using different DVRBs in the respective cells is suggested.

RAN WG1: "LS on Ran1 ICIC status", 3GPP DRAFT; R2-080706_R1-080564_ON_ICIC discloses the following: there are UL and DL inter-cell interference coordination status in Ran1. As for the UL ICIC, HII (High Interference Indicator) and OI (Overload Indicator) need to be reported. On HII reporting, it was decided to report one value per PRB on event triggered basis, being supposed to change with traffic load situation in the reporting eNB, and regarding the range of the reported values, it was decided to report one level (e.g. high/very high interference level). On OI reporting, it was confirmed the decision to report one value per PRB on event triggered basis, as agreed earlier by Ran1, and on range of the reported value(s), it was agreed to report 3 levels (e.g. indicating low, medium and high interference). As for the DL ICIC, relative narrowband Tx power need to be measured and reported.

"3rd Generation Partnership Project; Technical Specification Group Radio Access Network; Evolved Universal Terrestrial Radio Access Network (E-UTRAN); X2 application protocol (X2AP) (Release 10)", 3GPP STANDARD; 3GPP TS 36.423 discloses the following: The purpose of the Load Indication procedure is to transfer load and interference co-ordination information between eNBs controlling intra-frequency neighboring cells. An eNB initiates the procedure by sending LOAD INFORMATION message to eNBs controlling intra-frequency neighbouring cells. If the UL Interference Overload Indication IE is received in the LOAD INFORMATION message, it indicates the interference level experienced by the indicated cell on all resource blocks, per PRB. The receiving eNB may take such information into account when setting its scheduling policy and shall consider the received UL Interference Overload Indication IE value valid until reception of a new LOAD INFORMATION message carrying an update of the same IE. If the UL High Interference Indication IE is received in the LOAD INFORMATION message, it indicates, per PRB, the occurrence of high interference sensitivity, as seen from the sending eNB. If the Relative Narrowband Tx Power (RNTP) IE is received in the LOAD INFORMATION message, it indicates, per PRB, whether downlink transmission power is lower than the value indicated by the RNTP Ihreshold IE. If the ABS Information IE is included in the LOAD INFORMATION message, the ABS Pattern Info IE indicates the subframes designated as almost blank subframes by the sending eNB for the purpose of interference coordination.

CN101646257A discloses a method for determining a resource using mode of a cell. The method includes the following steps: determining the uplink and downlink configuration mode of sub-frame of the neighboring cell; comparing the uplink and downlink configuration mode of sub-frame of current cell with that of the neighboring cell, and configuring the usage priorities of each sub-frame of current cell according to the comparison result.

### Summary of the Invention

The embodiments of the invention provides a method and a device for inter-cell interference coordination so as to perform transmissions in neighbor cells in different directions over the same time resource without any interference between the neighbor cells.

An embodiment of the invention provides a method for inter-cell interference coordination, the method including:
obtaining, by a base station or a higher-layer network node of a base station, Time Division Duplex, TDD, sub-frame configuration information of neighbor cells and determining whether or not the neighbor cells are configured with transmissions in different directions in the same sub-frame, wherein the sub-frame configuration includes locations of respective uplink sub-frames and locations of respective downlink sub-frames in a radio frame; and
if the neighbor cells are configured with transmissions in different directions in the same sub-frame, then obtaining, by the base station or the higher-layer network node of the base station, data transmission related information of the neighbor cells in the same sub-frame, and performing interference coordination between the neighbor cells according to obtained data transmission related information of the neighbor cells in the same sub-frame;
wherein the data transmission related information of the neighbor cells in the same sub-frame includes:
   frequency domain resource use information of the neighbor cells in the same sub-frame;
   and wherein performing interference coordination between the neighbor cells includes:
      performing interference coordination between the neighbor cells through frequency domain resource coordination according to the obtained frequency domain resource use information;
      wherein the frequency domain resource use information in the same sub-frame includes Physical Resource Block, PRB, occupancy information, or occupancy information of a group of PRBs, which consists of a plurality of PRBs, in the same sub-frame;
      wherein the frequency domain resource use information in the same sub-frame further includes:
         a preset number of PRB identifiers as a result of dividing a system bandwidth and their conditions of occupancies by the cells in the same sub-frame, wherein the PRB identifiers are PRB numbers.

With the method and device for inter-cell interference coordination according to the embodiments of the invention, there are the following advantageous effects: transmissions can be performed in neighbor TDD base station cells over the same time resource in different directions, and mutual interference can be avoided through interference coordination; and such a situation in the traditional TDD interference coordination method can be obviated that different cells are forced to use the same sub-frame configuration so that service demands of the respective cells can not be accommodated. The method of the embodiment of the invention can be applicable to such situations that neighbor TDD cells operate over the same operating carriers as well as adjacent operating carriers.

### Brief Description of the Drawings

Fig. 1 is a schematic diagram of the time and frequency relationships in the fundamental duplex modes in the prior art;
Fig. 2 is a schematic diagram of a frame structure in a TD-LTE system in the prior art;
Fig. 3 is a schematic diagram of TDD cross-timeslot interference in the prior art;
Fig. 4 is a flow chart of a method for inter-cell interference coordination according to an embodiment of the invention;
Fig. 5 is a schematic diagram of neighbor cells with frequency division transmission of signals in different directions in the same sub-frame according to an embodiment of the invention;
Fig. 6 is a schematic diagram of a dynamic uplink and downlink sub-frame allocation solution according to an embodiment of the invention;
Fig. 7 is a structural diagram of a device for inter-cell interference coordination according to an embodiment of the invention; and
Fig. 8 is a schematic structural diagram of a base station according to an embodiment of the invention.

### Detailed Description of the Embodiments

A method and a device for inter-cell interference coordination according to embodiments of the invention will be described below in further details with reference to the drawings and the embodiments.

The TDD mode which is one of the two fundamental duplex modes has gained increasing attention in the context of a constantly increasing bandwidth demand of broadband mobile communications. For both uplink and downlink transmissions in a TDD system, uplink and downlink signals are transmitted over the same frequency resource in different timeslots. In common TDD systems including a 3G Time Division-Synchronous Code Division Multiple Access (TD-SCDMA) system and a 4G TD-LTE system, uplink and downlink timeslots are allocated statically or semi-statically, and a common method is to determine the ratio of allocated uplink to downlink timeslots dependent on the type and the rough service ratio of a cell and to keep the ratio unchanged. This is a simple method and also effective in the context of a macro cell with large coverage. Along with the technical development, an increasing number of low-power base stations including pico cells, home NodeBs, etc., are deployed to provide small local coverage, and in these cells, there are a small number of users and a significantly varying service demand of the users, so there is a dynamically changing demand for an uplink-to-downlink service ratio of the cells. Although an online change to the uplink-to-downlink timeslot ratio of a cell is also supported, for example, in the TD-LTE standard, a complex signalling flow and a configuration time period are required, thus degrading the performance of the system and also failing to trace a real time service change condition.

In view of this, some more dynamic TDD uplink and downlink configuration solutions have gained attention, but an application obstacle to these solutions is to arise serious cross-timeslot interference between neighbor cells, and such interference includes interference of neighbor cells at the same frequency and interference of neighbor cells at adjacent frequencies. If such interference fails to be addressed, then the benefit of a dynamic configuration of the uplink-to-downlink ratio cannot be gained, and on the contrary, the entire network will be broken down. An embodiment of the invention proposes a method for inter-cell interference coordination, preferably applicable to a Time Division-Long Term Evolution (TD-LTE) system, where neighbor TDD cells in the same network are temporally synchronized, and sub-frame configuration conditions of neighbor cells can be identified accurately and related interference avoidance operations are supported in the embodiment of the invention. As illustrated in Fig. 4, the method includes the following steps.

The step S401 is to obtain sub-frame configuration information of neighbor cells and to proceed to the step S402 upon determining that the neighbor cells are configured with transmissions in different directions in the same sub-frame.

In the method according to the embodiment of the invention, the neighbor cells can be geographically neighbor cells over the same TDD carrier. Also the neighbor cells here can be cells deployed at the same layer (e.g., macro cells) or can be cells deployed across different layers (e.g., a macro cell, a femto cell, a home base station, etc.). Thus the foregoing neighbor cells may be located at the same base station or different base stations, and in the latter case, the neighbor cells perform interaction of the frequency domain resource use information in the same sub-frame through signalling interaction between the different base stations.

The sub-frame configuration information in the embodiment of the invention includes locations of respective uplink sub-frames and locations of respective downlink sub-frames in a radio frame.

The step S402 is to perform interference coordination between the neighbor cells according to obtained data transmission related information of the neighbor cells in the same sub-frame.

In the prior art with the dynamic uplink and downlink sub-frame allocation solution, only a service demand is considered without taking into account whether uplink and downlink data transmissions are configured in the same sub-frame for the neighbor cells and even data transmission related information of the same sub-frame configured with uplink and downlink transmissions, thus easily resulting in cross-timeslot interference, and in the method according to the embodiment of the invention, data transmission related information in the same sub-frame configured with uplink and downlink transmissions in the neighbor cells is obtained to support judgment of whether there will be inter-cell interference arising, and interference coordination between the neighbor cells is performed according to the data transmission related information, thereby avoiding cross-timeslot interference in the dynamic uplink and downlink sub-frame allocation scenario so as to perform transmissions in neighbor TDD base station cells in different directions over the same time resource.

Preferably, if the neighbor cells are not configured with transmissions in different directions in the same sub-frame, then an existing flow proceeds.

Preferably, an executor for inter-cell interference coordination is a base station or a higher-layer network node of a base station, and when the executor is a base station, the base station adjusts a resource used by a cell located in the base station among the neighbor cells to perform interference coordination between the neighbor cells. If the executor is a higher-layer network node of a base station, interference coordination between the neighbor cells can be performed regardless of whether the neighbor cells are located at different base stations.

The data transmission related information can be parameter information that can be provided to a base station to perform interference judgment, and preferably in the embodiment of the invention, the data transmission related information can include frequency domain resource use information, and the base station obtains the frequency domain resource use information of the neighbor cells in the same sub-frame, to obtain frequency domain resource occupancy conditions of the neighbor cells in the same sub-frame; and performs interference coordination between the cell and the neighbor cell through frequency domain resource coordination according to the obtained frequency domain resource use information.

Typically if the neighbor cells configured with uplink and downlink transmissions use frequency domain resources over the same operating carrier in the same sub-frame or use frequency domain resources over adjacent operating carriers in the same sub-frame, inter-cell interference will arise, and in this embodiment, interference coordination between the neighbor cells is performed through frequency domain resource coordination, which includes: the frequency domain resources used by the neighbor cells in the same sub-frame are adjusted to avoid the neighbor cells from using the same frequency domain resource in the same sub-frame. For example, when the neighbor cells are determined to use the same frequency domain resource in the same sub-frame, the frequency domain resource used by the neighbor cells in the same sub-frame is adjusted to avoid the neighbor cells from using the same frequency domain resource in the same sub-frame, thus avoiding interference between the neighbor cells over the same carrier from arising in the same sub-frame configured with uplink and downlink transmissions.

When the neighbor cells are determined to respectively use adjacent frequency domain resources over adjacent carriers in the same sub-frame, the frequency domain resources used by the neighbor cells in the same sub-frame are adjusted to avoid the adjacent frequency domain resources over the adjacent operating carriers from being used respectively in the same sub-frame, thus avoiding interference between the neighbor cells over the adjacent carriers from arising in the same sub-frame configured with uplink and downlink transmissions.

The frequency domain resources are typically provided with PRBs or PRB identifiers, and in this embodiment, the frequency domain resource use information in the same sub-frame can be PRB occupancy information, or occupancy information of a group of PRBs consists of a plurality of PRBs, in the same sub-frame, thus the neighbor cells use different PRBs or groups of PRBs in the same sub-frame configured with uplink and downlink transmissions.

By way of an example, if neighbor cells A and B are configured with data transmissions in different directions in the same sub-frame, specifically, if a cell base station A uses a sub-frame n as a downlink sub-frame, and the neighbor cell base station B uses the sub-frame as an uplink sub-frame, then the cell base station A needs to notify the cell base station B of frequency domain resources to be used for downlink transmission in the sub-frame per PRB or group of PRBs, and also the cell base station B needs to notify the cell base station A of frequency domain resources to be used for uplink transmission in the sub-frame per PRB or group of PRBs. If the neighbor cells A and B are cells in a base station, then the base station adjusts the frequency domain resources used by the cell A and the cell B in the sub-frame n, and if they are cells in different base stations, then the different base stations adjust the frequency domain resources used by the cell A and the cell B in the sub-frame n respectively; or a higher-layer network node of the cell base station A and the cell base station B adjusts the cell A and the cell B.

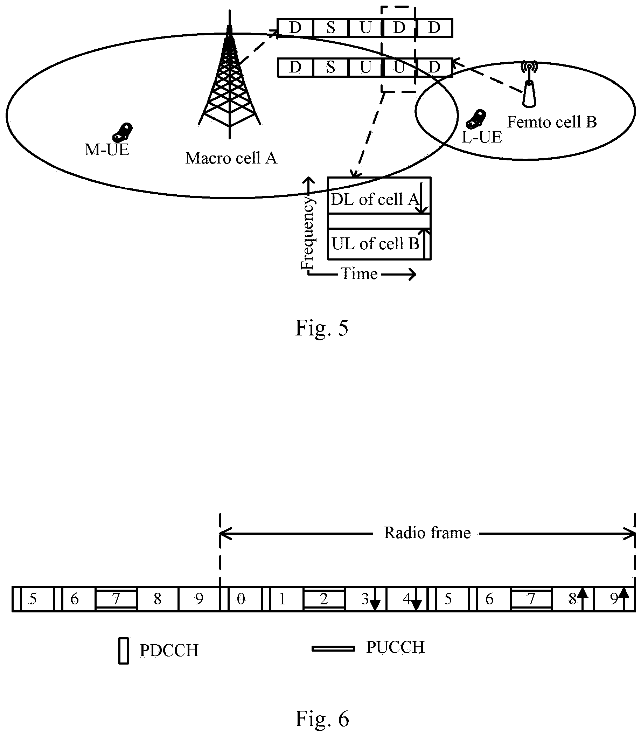

After the frequency domain resources are adjusted, the cell A and the cell B perform data transmissions over different frequency domain resources to avoid cross-timeslot interference. As illustrated in Fig. 5, the cell A is a macro cell in which there is a significant demand for a downlink service, and sub-frames per 5 ms are configured as DSUDD; and the neighbor cell B is a femto cell in which there is a significant demand for an uplink service, and its own sub-frames are configured as DSUUD per 5 ms. In the same sub-frame (the sub-frame 4 as illustrated) in different transmission directions, the two cells transmit data of the respective cells over different frequency domain resources, for example, resources of different PRBs (Physical Resource Blocks) or groups of PRBs.

PRB occupancy conditions can be notified, and preferably in this embodiment, the frequency domain resource use information in the same sub-frame can include a preset number of PRB identifiers as a result of dividing a system bandwidth and their conditions of occupancies by the cells in the same sub-frame. Preferably, the frequency domain resource use information in the same sub-frame can further include any one of identifiers of the cells and transmission directions of the cells in the same sub-frame. As depicted in Table 3-1 and Table 3-2, the frequency domain resource use information in the same sub-frame includes identifiers of the cells, i.e., cell IDs, a preset number of PRB identifiers (e.g., PRB numbers) as a result of dividing a system bandwidth and their conditions of occupancies by the cells in the same sub-frame, and transmission directions of the cells in the same sub-frame. A cell base station is enabled to notify a neighbor cell of frequency domain resources used by a cell in the cell base station in the same sub-frame in the form of a bitmap, as depicted in Table 3-1 and Table 3-2, where there are 110 PRBs in a system bandwidth 20MHz, and occupancy condition information is notified per PRB. Upon reception of corresponding information sent from the neighbor cell, the cell base station avoids scheduling over a PRB resource, marked by the neighbor cell as occupied, in a sub-frame with different transmission directions.

**Table 3-1 Cell Base Station Notifies Neighbor Cell of PRB Occupancy Condition information and Downlink Transmission Direction**

| Cell ID | PRB No. | Transmission Direction | Occupied or Unoccupied |
|---|---|---|---|
| A | 0 | Downlink transmission | 1(Occupied) |
| | 1 | | 1 |
| | 2 | | 1 |
| | 3 | | 0 |
| | ... | | ... |
| | 110 | | 0(Unoccupied) |

**Table 3-2 Cell Base Station Notifies Neighbor Cell of PRB Occupancy Condition information and Uplink Transmission Direction**

| Cell ID | PRB No. | Transmission Direction | Occupied or Unoccupied |
|---|---|---|---|
| B | 0 | Uplink transmission | 0 |
| | 1 | | 0 |
| | 2 | | 0 |
| | 3 | | 1 |
| | ... | | ... |
| | 110 | | 1 |

In another embodiment of the invention, the data transmission related information obtained by the base station is transmission power information and/or interference level information. The data transmission related information of the neighbor cells in the same sub-frame can include transmission power information of a cell, configured with downlink transmission in the same sub-frame among the neighbor cells, over frequency domain resources in the same sub-frame; and/or interference level information of a cell, configured with uplink transmission in the same sub-frame among the neighbor cells, over frequency domain resources in the same sub-frame. Then interference coordination between the neighbor cells is performed by performing interference coordination between the cell and the neighbor cell through frequency domain resource coordination according to the obtained transmission power information and/or interference level information.

There are three scenarios involved in this embodiment:
1) For the neighbor cells configured with different transmission directions in the same sub-frame, transmission power information of a cell, configured with downlink transmission in the same sub-frame, over frequency domain resources in the same sub-frame needs to be obtained;
2) For the neighbor cells configured with different transmission directions in the same sub-frame, interference level information of a cell, configured with uplink transmission in the same sub-frame, over frequency domain resources in the same sub-frame needs to be obtained; and
3) For the neighbor cells configured with different transmission directions in the same sub-frame, both transmission power information of a cell, configured with downlink transmission in the same sub-frame, over frequency domain resources in the same sub-frame and interference level information of a cell, configured with uplink transmission in the same sub-frame, over frequency domain resources in the same sub-frame need to be obtained.

Preferably, when the transmission power information is obtained, inter-cell interference coordination is performed in the following scheme: 1) frequency domain resources, of a cell configured with downlink transmission in the same sub-frame, with transmission powers exceeding a preset power threshold in the same sub-frame are determined, and frequency domain resources, used by a cell configured with uplink transmission in the same sub-frame, in the same sub-frame are adjusted to avoid using the frequency domain resources with transmission powers exceeding the preset power threshold. Specifically, frequency domain resources, used by a cell configured with uplink transmission, in the same sub-frame are adjusted to avoid all of users from using frequency domain resources with transmission powers exceeding the preset power threshold, or frequency domain resources, used by a cell configured with uplink transmission, in the same sub-frame are adjusted to avoid cell edge users from using frequency domain resources with transmission powers exceeding the preset power threshold.

Preferably, when the interference level information is obtained, the base station performs inter-cell interference coordination in the following scheme: 2) frequency domain resources, of a cell configured with uplink transmission, with interference levels exceeding a preset interference threshold in the same sub-frame are determined, and frequency domain resources, used by a cell configured with downlink transmission, in the same sub-frame are adjusted to avoid using the frequency domain resources with interference levels exceeding the preset interference threshold.

Alternatively, when the interference level information is obtained, the base station performs inter-cell interference coordination in the following scheme: 3) frequency domain resources, of a cell configured with uplink transmission, with interference levels exceeding a preset interference threshold in the same sub-frame are determined, and transmission powers of a cell configured with downlink transmission over frequency domain resources with interference levels exceeding the preset interference threshold in the same sub-frame is lowered.

Thus the interference coordination scheme 1) is adopted for the scenario 1), the interference coordination scheme 2) or the interference coordination scheme 3) can be adopted for the scenario 2), and the interference coordination schemes 1) and 2) or the interference coordination schemes 1) and 3) can be adopted for the scenario 3).

If the executor is a base station, then the neighbor cells are located in the same base station or different base stations, and in the latter case, the neighbor cells perform interaction of transmission power information and/or interference level information in the same sub-frame through signalling interaction between the different base stations.

Preferably, the transmission power information of the frequency domain resources in the same sub-frame configured with the different transmission directions in the neighbor cells can be quantification levels corresponding to transmission powers of respective PRBs used in the same sub-frame, where a different transmission power is quantified into a different level according to a segment of power data to which it belongs.

Preferably, the interference level information of the frequency domain resources in the same sub-frame configured with the different transmission directions in the the neighbor cells can be quantification levels corresponding to interference levels of respective PRBs used in the same sub-frame, where a different interference level is quantified into a different level according to a segment of interference data to which it belongs.

In this embodiment, the transmission power information over the frequency domain resources in the same sub-frame includes identifiers of the cells, identifiers of a preset number of PRBs as a result of dividing a system bandwidth and the quantification levels corresponding to their transmission powers in the same sub-frame, and transmission directions of the cells in the same sub-frame; and the interference level information over the frequency domain resources in the same sub-frame includes identifiers of the cells, identifiers of a preset number of PRBs as a result of dividing the system bandwidth and the quantification levels corresponding to their interference levels in the same sub-frame, and transmission directions of the cells in the same sub-frame.

As depicted in Table 4-1 and Table 4-2, the transmission powers/interference levels, etc., can be quantified variously. Assumed there are 110 PRBs in a system bandwidth 20MHz, and in the case that the neighbor cells are located in different base stations, a base station where a cell with downlink transmission in the same sub-frame is located notifies a base station, where a neighbor cell is located, of transmission power information of the cell in the same sub-frame, and the base station where the cell with uplink transmission in the same sub-frame is located notifies the base station, where the neighbor cell is located, of interference level information of the cell in the same sub-frame. As depicted in Table 4-1 and Table 4-2, the base station where the cell A is located quantifies transmission power information of the cell A for downlink transmission over respective PRBs in a specific sub-frame (which is the same sub-frame configured with different transmission directions) into several levels and notifies the neighbor cell, and upon reception of the information, the base station where the cell B for uplink transmission in the same sub-frame neighbor to the cell A is located avoids uplink transmission from being scheduled over frequency domain resources marked as "High power" or "Medium power" by the base station where the cell A is located; and correspondingly, the base station where the cell B is located quantifies receiving interference level information thereof for uplink transmission over respective PRBs in a specific sub-frame and notifies the base station where the neighbor cell A is located, and upon reception of the information, the base station where the cell A for downlink transmission in the same sub-frame is located avoids downlink transmission from being scheduled, or performs downlink transmission at a low power, over frequency domain resources marked as "High interference level" by the base station where the cell B is located. In Table 4-1, the quantification levels "High power", "Medium power" and "Low power" correspond to different segments of power data, and "Unused" represents that the PRB is not used; and in Table 4-2, the quantification levels "Low Interference Level" and "High Interference Level" correspond to different segments of interference data.

**Table 4-1 Cell Base station Notifies Neighbor Cell of Transmission Power Information**

| Cell ID | PRB No. | Transmission Direction | Power Level Information |
|---|---|---|---|
| A | 0 | Downlink transmission | High power |
| | 1 | | High power |
| | 2 | | Medium power |
| | 3 | | Low power |
| | ... | | ... |
| | 110 | | Unused |

**Table 4-2 Cell Base station Notifies Neighbor Cell of Receiving Interference Level Information**

| Cell ID | PRB No. | Transmission Direction | Interference Level Information |
|---|---|---|---|
| B | 0 | Uplink transmission | Low Interference Level |
| | 1 | | Low Interference Level |
| | 2 | | Low Interference Level |
| | 3 | | High Interference Level |
| | ... | | ... |
| | 110 | | High Interference Level |

With an application of the method for inter-cell interference coordination according to the embodiment of the invention, transmissions can be performed in neighbor TDD base station cells over the same time resource in different directions, and mutual interference can be avoided through frequency domain resource coordination; and such a situation in the traditional TDD interference coordination method can be obviated that different cells are forced to use the same sub-frame configuration so that service demands of the respective cells can not be accommodated. The technical solution according to the embodiment of the invention can be applicable to such situations that neighbor TDD cells operate over the same operating carriers as well as adjacent operating carriers to avoid effectively cross-timeslot interference at adjacent frequencies due to power leakage.

The method for inter-cell interference coordination according to the embodiment of the invention is applicable to a scenario with a dynamic uplink and downlink sub-frame configuration, e.g., a scenario with the following dynamic allocation scheme.

In a specific time cycle, there are preset three types of sub-frames including sub-frames fixedly used for downlink transmission, sub-frames fixedly used for uplink transmission, and sub-frames flexibly allocated for uplink or downlink transmission. Taking Fig. 6 as an example, the time cycle is one radio frame (which is only illustrative but can alternatively be another time cycle) including the sub-frames #0 and #5 which are fixed downlink sub-frames, the sub-frames #2 and #7 which are fixed uplink sub-frames, the sub-frames #1 and #6 which are special sub-frames (which can also be deemed as fixed downlink sub-frames), and the other sub-frames (#3, #4, #8, #9) which are sub-frames flexibly allocated for uplink or downlink transmission. For the last type of sub-frames, the base station can configure them dynamically dependent on a real-time service demand and channel condition to accommodate a dynamic change in a service demand.

The data transmission related information in this embodiment is applicable to a sub-frame configured with opposite transmission directions in the neighbor cells in the preset time cycle or all sub-frames each of which is configured wtih opposite transmission directions in the neighbor cells in the preset time cycle. That is, in the foregoing several notification schemes, the contents of the notification can be notifications for one sub-frame in opposite directions, where there is a set of notification information per sub-frame, or can be only a set of notification information applicable to all the sub-frames in opposite directions. Furthermore, the related signalling notification can be performed via a wired interface, e.g., an X2 interface, an S1 interface, etc., or via an air interface between the base stations.

Based on the same inventive idea, embodiments of the invention further provide a device for inter-cell interference coordination and a base station, and since the device and the base station address the problems under a similar principle to the method for inter-cell interference coordination, reference can be made to the implementation of the method for implementations of the device and the base station, and a repeated description thereof will be omitted here.

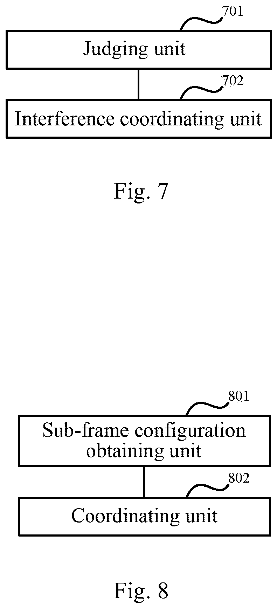

As illustrated in Fig. 7, a device for inter-cell interference coordination according to an embodiment of the invention includes: a judging unit 701 configured to obtain sub-frame configuration information of neighbor cells and to judge whether the neighbor cells are configured with transmissions in different directions in the same sub-frame; and an interference coordinating unit 702 configured to perform interference coordination between the neighbor cells according to obtained data transmission related information if the judgment is positive.

The data transmission related information of the neighbor cells in the same sub-frame includes frequency domain resource use information of the neighbor cells in the same sub-frame; and the interference coordinating unit 702 is configured to perform interference coordination between the neighbor cells through frequency domain resource coordination according to the obtained frequency domain resource use information.

The interference coordinating unit 702 is configured to adjust frequency domain resources used by the neighbor cells in the same sub-frame to avoid the neighbor cells from using the same frequency domain resource in the same sub-frame.

The data transmission related information of the neighbor cells in the same sub-frame includes transmission power information of a cell, configured with downlink transmission in the same sub-frame among the neighbor cells, over frequency domain resources in the same sub-frame; and/or interference level information of a cell, configured with uplink transmission in the same sub-frame among the neighbor cells, over frequency domain resources in the same sub-frame; and the interference coordinating unit 702 is configured to perform interference coordination between the neighbor cells through frequency domain resource coordination according to the obtained transmission power information and/or interference level information.

When the transmission power information is obtained, the interference coordinating unit 702 is configured to determine frequency domain resources, of the cell configured with downlink transmission in the same sub-frame, with transmission powers exceeding a preset power threshold in the same sub-frame, and to adjust the frequency domain resources, used by the cell configured with uplink transmission, in the same sub-frame to avoid using the frequency domain resources with transmission powers exceeding the preset power threshold.

Furthermore, the interference coordinating unit 702 is configured to adjust the frequency domain resources, used by the cell configured with uplink transmission, in the same sub-frame to avoid cell edge users from using the frequency domain resources with transmission powers exceeding the preset power threshold.

When the interference level information is obtained, the interference coordinating unit 702 is configured to determine frequency domain resources, of the cell configured with uplink transmission in the same sub-frame, with interference levels exceeding a preset interference threshold in the same sub-frame, and to adjust frequency domain resources, used by the cell configured with downlink transmission, in the same sub-frame to avoid using the frequency domain resources with interference levels exceeding the preset interference threshold.

Alternatively, when the interference level information is obtained, the interference coordinating unit 702 is configured to determine frequency domain resources, of the cell configured with uplink transmission in the same sub-frame, with interference levels exceeding a preset interference threshold in the same sub-frame, and to lower transmission powers of the cell configured with downlink transmission over the frequency domain resources with interference levels exceeding the preset interference threshold in the same sub-frame.

As illustrated in Fig. 8, a base station according to an embodiment of the invention includes: a sub-frame configuration obtaining unit 801 configured to obtain sub-frame configuration information of neighbor cells; and a coordinating unit 802 configured to adjust a resource used by a cell located in the base station among the neighbor cells to perform interference coordination between the neighbor cells according to obtained data transmission related information of the neighbor cells in the same sub-frame upon determining that the neighbor cells are configured with transmissions in different directions in the same sub-frame. The coordinating unit 802 adjusts the resource used by the cell located in the base station among the neighbor cells as in the foregoing embodiments except that only the cell located in the base station among the neighbor cells is adjusted.

Those skilled in the art shall appreciate that the embodiments of the invention can be embodied as a method, a system or a computer program product. Therefore the invention can be embodied in the form of an all-hardware example, an all-software example or an example of software and hardware in combination. Furthermore, the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable data processing device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention. The invention is defined by the appended claims.

## Claims

1. A method for inter-cell interference coordination, the method comprises:
obtaining, by a base station or a higher-layer network node of a base station, Time Division Duplex, TDD, sub-frame configuration information of neighbor cells and determining whether or not the neighbor cells are configured with transmissions in different directions in the same sub-frame (S401), wherein the sub-frame configuration information includes locations of respective uplink sub-frames and locations of respective downlink sub-frames in a radio frame; and
if the neighbor cells are configured with transmissions in different directions in the same sub-frame, then obtaining, by the base station or the higher-layer network node of the base station, data transmission related information of the neighbor cells in the same sub-frame, and performing interference coordination between the neighbor cells according to the obtained data transmission related information of the neighbor cells in the same sub-frame (S402);
wherein the data transmission related information of the neighbor cells in the same sub-frame comprises:
frequency domain resource use information of the neighbor cells in the same sub-frame;
and wherein performing interference coordination between the neighbor cells comprises:
performing interference coordination between the neighbor cells through frequency domain resource coordination according to the obtained frequency domain resource use information;
wherein the frequency domain resource use information in the same sub-frame comprises Physical Resource Block, PRB, occupancy information, or occupancy information of a group of PRBs, which consists of a plurality of PRBs, in the same sub-frame;
wherein the frequency domain resource use information in the same sub-frame further comprises:
a preset number of PRB identifiers as a result of dividing a system bandwidth and their conditions of occupancies by the cells in the same sub-frame, wherein the PRB identifiers are PRB numbers.

2. The method according to claim 1, wherein performing interference coordination between the neighbor cells through frequency domain resource coordination comprises:
adjusting frequency domain resources used by the neighbor cells in the same sub-frame to avoid the neighbor cells from using the same frequency domain resource in the same sub-frame.

3. The method according to claim 1, wherein the frequency domain resource use information in the same sub-frame further comprises any one of identifiers of the cells and transmission directions of the cells in the same sub-frame.

4. The method according to claim 1, wherein when an executor for inter-cell interference coordination is the base station, the base station adjusts a resource used by a cell located in the base station among the neighbor cells to perform interference coordination between the neighbor cells.

## Patentansprüche

1. Verfahren zur Interferenzkoordinierung zwischen Zellen, wobei das Verfahren Folgendes aufweist:
Gewinnen, durch eine Basisstation oder einen Netzwerkknoten auf höherer Ebene einer Basisstation, von Time Division Duplex, TDD, Subrahmen-Konfigurationsinformationen von Nachbarzellen und Bestimmen, ob die Nachbarzellen mit Übertragungen in verschiedene Richtungen in demselben Subrahmen konfiguriert sind oder nicht (S401), wobei die Subrahmen-Konfigurationsinformationen Positionen von jeweiligen Uplink-Subrahmen und Positionen von jeweiligen Downlink-Subrahmen in einem Funkrahmen aufweisen; und
wenn die Nachbarzellen mit Übertragungen in verschiedene Richtungen in demselben Subrahmen konfiguriert sind, sodann Gewinnen, durch die Basisstation oder den Netzwerkknoten auf höherer Ebene der Basisstation, von Informationen bezüglich Datenübertragung der Nachbarzellen in demselben Subrahmen, und Durchführen von Interferenzkoordinierung zwischen den Nachbarzellen gemäß den gewonnenen Informationen bezüglich Datenübertragung der Nachbarzellen in demselben Subrahmen (S402);
wobei die Informationen bezüglich Datenübertragung der Nachbarzellen in demselben Subrahmen Folgendes enthalten:
Informationen über Frequenzbereich-Ressourcennutzung der Nachbarzellen in demselben Subrahmen;
und wobei das Durchführen von Interferenzkoordinierung zwischen den Nachbarzellen Folgendes aufweist:
Durchführen von Interferenzkoordinierung zwischen den Nachbarzellen durch Frequenzbereich-Ressourcenkoordinierung gemäß den gewonnenen Informationen über Frequenzbereich-Ressourcennutzung;
wobei die Informationen über Frequenzbereich-Ressourcennutzung in demselben Subrahmen Physical Resource Block, PRB, Belegungsinformationen oder Belegungsinformationen einer Gruppe von PRB, welche aus einer Mehrzahl von PRB besteht, in demselben Subrahmen enthalten;
wobei die Informationen über Frequenzbereich-Ressourcennutzung in demselben Subrahmen weiterhin Folgendes enthalten:
eine vorgegebene Anzahl von PRB Kennungen als Folge des Teilens einer Systembandbreite und ihrer Belegungszustände durch die Zellen in demselben Subrahmen, wobei die PRB Kennungen aus PRB Zahlen bestehen.

2. Verfahren nach Anspruch 1, wobei das Durchführen von Interferenzkoordinierung zwischen den Nachbarzellen durch Frequenzbereich-Ressourcenkoordinierung Folgendes aufweist:
Anpassen von durch die Nachbarzellen in demselben Subrahmen verwendeten Frequenzbereich-Ressourcen, um zu vermeiden, dass die Nachbarzellen dieselbe Frequenzbereich-Ressource in demselben Subrahmen verwenden.

3. Verfahren nach Anspruch 1, wobei die Informationen über die Frequenzbereich-Ressourcennutzung in demselben Subrahmen ferner eine beliebige der Kennungen der Zellen und der Übertragungsrichtungen der Zellen in demselben Subrahmen enthalten.

4. Verfahren nach Anspruch 1, wobei, wenn ein ausführendes Organ für Interferenzkoordinierung zwischen Zellen die Basisstation ist, die Basisstation eine Ressource, die von einer in der Basisstation zwischen den Nachbarzellen befindlichen Zelle genutzt wird, zur Durchführung von Interferenzkoordinierung zwischen den Nachbarzellen anpasst.

## Revendications

1. Procédé de coordination d'interférences intercellulaires, le procédé comportant les étapes consistant à :
obtenir, par une station de base ou un nœud de réseau des couches supérieures d'une station de base, des informations de configuration de sous-trame de duplex à répartition dans le temps, TDD, de cellules voisines et déterminer si les cellules voisines sont ou ne sont pas configurées avec des transmissions dans différents sens dans la même sous-trame (S401), dans lequel les informations de configuration de sous-trame incluent des emplacements de sous-trames de liaison montante respectives et des emplacements de sous-trames de liaison descendante respectives dans une trame radio ; et
si les cellules voisines sont configurées avec des transmissions dans différents sens dans la même sous-trame, alors obtenir, par la station de base ou le nœud de réseau des couches supérieures de la station de base, des informations liées à une transmission de données des cellules voisines dans la même sous-trame, et réaliser une coordination d'interférences entre les cellules voisines en fonction des informations obtenues liées à une transmission de données des cellules voisines dans la même sous-trame (S402) ;
dans lequel les informations liées à une transmission de données des cellules voisines dans la même sous-trame comportent :
des informations sur l'utilisation de ressources du domaine fréquentiel des cellules voisines dans la même sous-trame ;
et dans lequel la réalisation de la coordination d'interférences entre les cellules voisines comporte l'étape consistant à :
réaliser une coordination d'interférences entre les cellules voisines par une coordination de ressources du domaine fréquentiel en fonction des informations obtenues sur l'utilisation de ressources du domaine fréquentiel ;
dans lequel les informations sur l'utilisation de ressources du domaine fréquentiel dans la même sous-trame comportent des informations d'occupation de blocs de ressources physiques, PRB, ou des informations d'occupation d'un groupe de PRB, qui est constitué d'une pluralité de PRB, dans la même sous-trame ;
dans lequel les informations sur l'utilisation de ressources du domaine fréquentiel dans la même sous-trame comportent en outre :
un nombre préétabli d'identifiants de PRB en tant que résultat de la division d'une largeur de bande de système et leurs conditions d'occupation par les cellules dans la même sous-trame, dans lequel les identifiants de PRB sont des numéros de PRB.

2. Procédé selon la revendication 1, dans lequel la réalisation d'une coordination d'interférences entre les cellules voisines par coordination de ressources du domaine fréquentiel comporte l'étape consistant à :
ajuster des ressources du domaine fréquentiel utilisées par les cellules voisines dans la même sous-trame pour éviter aux cellules voisines d'utiliser la même ressource du domaine fréquentiel dans la même sous-trame.

3. Procédé selon la revendication 1, dans lequel les informations sur l'utilisation de ressources du domaine fréquentiel dans la même sous-trame comportent en outre l'un quelconque des identifiants des cellules et des sens de transmission des cellules dans la même sous-trame.

4. Procédé selon la revendication 1, dans lequel lorsqu'un exécuteur pour la coordination d'interférences intercellulaires est la station de base, la station de base ajuste une ressource utilisée par une cellule située dans la station de base parmi les cellules voisines pour réaliser une coordination d'interférences entre les cellules voisines.
